# EUROPEAN PATENT SPECIFICATION

(11) **EP 3 426 526 B1**
(45) Date of publication and mention of the grant of the patent: **11.11.2020**
(21) Application number: 17711520.1
(22) Date of filing: 06.03.2017
(51) Int. Cl.: B60R 13/08, B32B 5/26

(54) **VEHICULAR SOUND ABSORBING MEMBER**
GERÄUSCHDÄMMENDES TEIL EINES FAHRZEUGS
PARTIE INSONORISANT D'UN VÉHICULE

(30) Priority: 11.03.2016 JP 2016048318
(43) Date of publication of application: 16.01.2019
(73) Proprietor: 3M Innovative Properties Company, Saint Paul, Minnesota 55133-3427 (US)
(72) Inventor: KURASHIMA, Daisuke, Shinagawa-ku, Tokyo 141-8684 (JP)
(74) Representative: Mathys & Squire
(86) International application number: PCT/US2017/020864
(87) International publication number: WO 2017/155850

(56) References cited:
- WO-A1-2015/168085

## Description

### Technical Field

The present invention relates to sound absorbing material, in particular to a vehicular member with sound absorbing characteristics, and more particularly to a vehicle exterior cladding member that is suitable for being exposed to the environment outside of a vehicle.

### Background Art

Various sound absorbing materials have been used for suppressing various noises. For example, a sound absorbing material or member for a vehicle exterior is used for suppressing noise external to the vehicle that infiltrates the interior of the vehicle (such as traveling noise generated when the vehicle is traveling). Reference documents in this field include, for example, Japanese Unexamined Patent Application Publication No. 2007-261359A and Japanese Unexamined Patent Application Publication No. 2009-184296A.

In Japanese Unexamined Patent Application Publication No. 2007-261359A, a sound absorbing material for a vehicle exterior is disclosed. The sound absorbing material for the vehicle exterior includes a non-woven fabric containing main fibers and binder fibers. The non-woven fabric is provided with a resin layer formed by heating a powder-like resin applied to the surface of the non-woven fabric. Since part of the powder-like resin remains in a particle state, the resin layer is porous.

In Japanese Unexamined Patent Application Publication No. 2009-184296A, another sound absorbing material is disclosed. The sound absorbing material is composed of a composite non-woven fabric formed by laminating and integrating an organic fiber non-woven fabric (A) and a melt-blow non-woven fabric (B) formed of organic fibers with a fiber fineness of not greater than 0.5 dtex. The organic fiber non-woven fabric (A) is composed of 10 to 90 wt% of heat-bonding organic fibers (a) having a core structure with a fiber fineness of 1.1 to 22 dtex and 10 to 90 wt% of actually crimped type polyester short fibers (b) having a fiber fineness of 2.2 to 33 dtex. The above-described composite non-woven fabric is formed by subjecting the laminated organic fiber non-woven fabric (A) and melt-blow non-woven fabric (B) to heat treatment by a dryer or heat roll processing so as to melt the heat-bonding organic fibers (a) having the core structure, such that the organic fiber non-woven fabric (A) and the melt-blow non-woven fabric (B) are formed integrally. The document WO 2015/168085 A1 representing the closest prior art discloses a vehicular sound absorbing member comprising a non-woven fabric web having a loss factor tanδ at 20°C and 10 Hz of not less than 0.07, wherein the non-woven fabric web includes long fibers and short fibers, the long fibers being melt-blown fibers and the short fibers being binder fibers, and wherein the melt-blown fibers (52) comprise at least one resin selected from the group of resins consisting of a cellulose, a polyimide, ethylene alpha-olefin copolymer, a polybutylene naphthalate, a polyacetal, an ethylene-propylene copolymer, a polyolefin thermoplastic elastomer, a styrene thermoplastic elastomer, a polyurethane thermoplastic elastomer, a polyester thermoplastic elastomer.

### Summary of Invention

A sound absorbing material is required to have a high sound absorption coefficient in a frequency domain corresponding to a usage environment, a purpose of use and the like. For example, when the sound absorbing material is used as a sound absorbing member for a vehicle exterior cladding member, the sound absorbing material preferably has an excellent sound absorption coefficient with respect to sound ranging from 500 to 800 Hz, like noise arising from a vehicle interacting with a road (road noise), such as that caused by friction and impact between the road surface and the tires, when the vehicle is traveling.

In one aspect of the present invention, a vehicular sound absorbing member is provided that includes a non-woven fabric web, with a loss factor of the non-woven fabric web at 20°C and 10 Hz being not less than about 0.07, and with a bending rigidity of the non-woven fabric web being not less than about 0.5 N/50 mm.

According to the present invention, a vehicular member can be provided that has an excellent sound absorption coefficient when the vehicular member is used as a sound absorbing member for a vehicle exterior cladding member (such as a fender liner), for example.

### Brief Description of the Drawings

FIG. 1 is a schematic cross-sectional view illustrating an embodiment of a non-woven fabric web.
FIG. 2 is a schematic diagram illustrating the embodiment of a method for manufacturing the non-woven fabric web.
FIG. 3A is a schematic diagram illustrating the embodiment of a vehicular member, and FIG. 3B is a schematic end face view illustrating an end face as viewed in the direction of arrows in FIG. 3A.

### Description of Embodiments

A preferred embodiment of the present invention will be described below in detail with reference to the drawings, but the present invention is not limited to the following embodiment. Note that in the following description, identical or similar structural elements will be assigned the same reference sign and a duplicate description will be omitted.

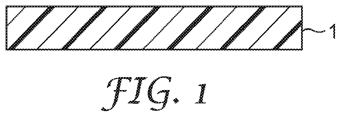

A vehicular member according to the present embodiment is provided with a non-woven fabric web. FIG. 1 is a schematic cross-sectional view illustrating the embodiment of the non-woven fabric web.

In this specification, a web means an object (a sheet, for example) formed as a result of fibers being connected or entangled with each other, for example.

A long fiber may be a long continuous fiber manufactured using the melt-blown method.

The long fiber is a fiber (a melt-blown fiber) manufactured using the melt-blown method, from the viewpoint of being able to spin a non-woven fabric web having a finer fiber diameter and thereby being able to improve a sound absorption coefficient of the non-woven fabric web.

In this specification, of fibers formed by melting a thermoplastic material and forming the melted thermoplastic material into a thread-like shape (or a filament-like shape) using a die (a mold), the melt-blown fiber means a particularly fine fiber formed by being extruded into a flow of high-speed gas (air, for example). The melted thermoplastic material formed into the thread-like shape or the filament-like shape is stretched by the flow of high-speed gas, and the diameter thereof is reduced. The fiber diameter of the melt-blown fiber may be less than about 20 micrometers (µm) or may be from about 1 to about 10 µm. The binder fiber means a short fiber that plays a role as a binder that connects fibers with each other (connects fibers by fusion, for example).

In the non-woven fabric web 1, the melt-blown fibers (the long fibers), which are continuously injected in a plurality from the die in a melted state, and the binder fibers (the short fibers), which are oriented in various directions, are entangled with each other. Each of the melt-blown fibers and the binder fibers are fused with each other at least part of an intersection (an entanglement point) between the melt-blown fiber and the binder fiber. In the non-woven fabric web 1, not only are the melt-blown fibers and the binder fibers fused with each other, but also, the binder fibers may be fused with each other. Although a specific manufacturing method will be described later, the non-woven fabric web 1 can be obtained by spraying the binder fibers into the flow of the melt-blown fibers continuously injected from the die so as to cause the melt-blown fibers and the binder fibers to be entangled with each other, thus constituting a web formed of the melt-blown fibers and the binder fibers, and then heating, pressing, and compressing the web in a state in which the binder fibers are oriented in various directions and dispersed.

Thus, the binder fiber is preferably a fiber having thermal properties that make it possible for the fiber to melt or soften when the web is heated, for example, and to be fused with the melt-blown fiber. In addition, a melting temperature (or a softening temperature) of the binder fiber is preferably lower than the melting temperature (or the softening temperature) of the melt-blown fiber. Here, the melting temperature means a "melting temperature" as defined in JIS K7121 (1987), and the softening temperature means the "Vicat softening temperature" as defined in JIS K7206 (1999).

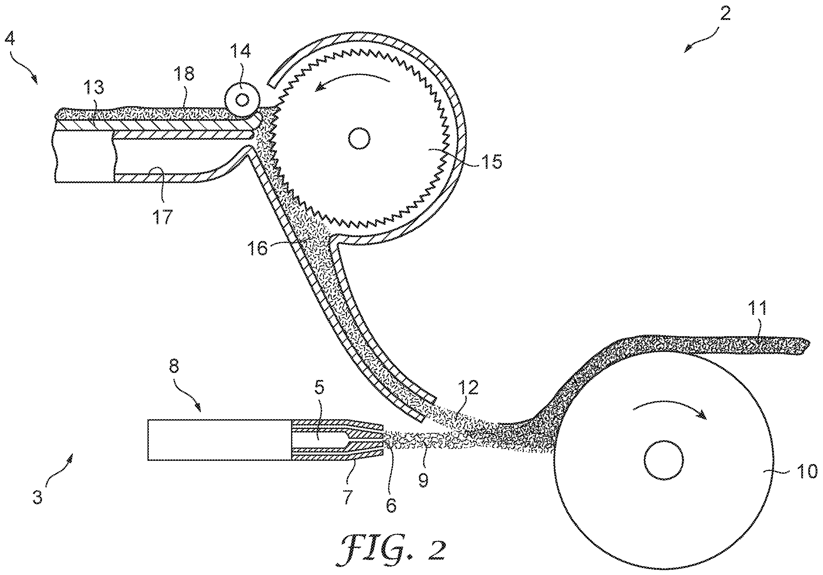

Next, a method for manufacturing the non-woven fabric web 1 will be described. FIG. 2 is a schematic diagram illustrating the method for manufacturing the non-woven fabric web 1. As illustrated in FIG. 2, a non-woven fabric web manufacturing device 2 is used for manufacturing the non-woven fabric web 1. The non-woven fabric web manufacturing device 2 is provided with a first unit (a melt-blown device) 3 that supplies the melt-blown fibers and a second unit (a fiber blowing device) 4 that supplies the binder fibers, for example. This non-woven fabric web manufacturing device 2 is identical to a device disclosed by Hauser in U.S. Patent No. 4,118,531.

The first unit (melt-blown device) 3 is provided with a melt-blown die 8 that includes, for example, an extruder (not illustrated), an extrusion chamber 5 that pushes forward a melted thermoplastic material (a thermoplastic resin or the like) from an inflow side toward an outflow side, a die orifice 6 that extrudes the melted thermoplastic material, which has been pushed forward from the extrusion chamber 5, to the outside, and a linked gas orifice 7 that sprays gas (heated air, for example) toward the outside at a high speed. In the first unit (melt-blown device) 3, the melted thermoplastic resin supplied from the extruder is extruded from the melt-blown die 8, thereby forming melt-blown fibers (long fibers) 9 (the melt-blown method). The high-speed gas sprayed from the linked gas orifice 7 causes the extruded thermoplastic material to be stretched and become finer. The thermoplastic material that has been made finer (fine fibers) solidifies when moving to the surface of an accumulation device. An aspect ratio (a ratio of the fiber length with respect to the fiber diameter) gradually approaches infinity. Since the melt-blown fibers may be cut when they are made finer by the high-speed gas, it is known that their fiber length is not necessarily uniform.

The first unit (melt-blown device) 3 illustrated in FIG. 2 may be a conventional structure such as disclosed in the "Superfine Thermoplastic Fibers" of Wente, Van A and in the Report No. 4364 of the Naval Research Laboratories. Both of those structures are cited in the above-described U.S. Patent No. 4,118,531 disclosed by Hauser.

The melt-blown fibers 9 formed in this manner are blown against a rotating drum 10, which includes a screen or the like provided with fine holes in the surface thereof, and the melt-blown fibers 9 are accumulated on the surface of the rotating drum 10, thereby producing a web 11. This rotating drum 10 has at least the same width as that of the melt-blown die 8. The surface of the rotating drum 10 is set to be separated from the melt-blown die 8 by a distance ranging from about 0.3 to about 1 m or from about 0.38 to about 0.64 m. In FIG. 2, an example is illustrated in which the melt-blown fibers 9 are accumulated on the surface of the rotating drum 10. However, an object on which the melt-blown fibers 9 are accumulated (the accumulation device) may be a belt conveyor or the like, instead of the rotating drum 10, or may be a device configured by combining a plurality of rotating drums and belt conveyors. In the accumulation device, a suction device may be provided on a back surface of the surface (accumulation surface) on which the melt-blown fibers 9 are accumulated, and the melt-blown fibers 9 may be sucked by the suction device at the same time as the melt-blown fibers 9 are blown against the accumulation surface.

A rotating speed of the rotating drum 10 (or an operation speed of the accumulation device) is preferably set to be a speed sufficiently lower than an injection speed of the melt-blown fibers 9. By adjusting the rotating speed of the rotating drum 10, a weight per unit area of the web 11 to be obtained and of the non-woven fabric web 1 can be adjusted. For example, when the rotating speed of the rotating drum 10 is reduced, an amount of the melt-blown fibers 9 accumulated on the surface of the rotating drum 10 increases, and the weight per unit area can be increased.

When blowing the melt-blown fibers 9 against the rotating drum 10 and forming the web 11, the binder fibers (short fibers) 12 can be mixed into the web 11 by using the second unit (fiber blowing device) 4 disposed above the first unit (melt-blown device) 3, for example. Specifically, as illustrated in FIG. 2, the binder fibers 12 are mixed into the web 11 using the second unit (fiber blowing device) 4 provided with a chute 13, a drive roll 14, a lickerin roll 15, a duct 16, and an air supply duct 17. A fiber aggregate 18, which is used as a raw material of the binder fibers 12, is caused to move along the chute 13 by the drive roll 14. When the front end of the fiber aggregate 18 reaches a position below the drive roll 14, fibers are torn off from the fiber aggregate 18 by the lickerin roll 15 and supplied into the duct 16 as the binder fibers. The binder fibers 12 are blown against the flow of the melt-blown fibers 9 that are injected from the melt-blown die 8, as a result of an air flow generated by the rotation of the lickerin roll 15 or an air flow supplied from the air supply duct 17 flowing into the duct 16. In this way, the binder fibers 12 can be incorporated into the flow of the melt-blown fibers 9, and the web 11 is produced in which the melt-blown fibers 9 and the binder fibers 12 are intermixed with each other. As a result, in the web 11, a state is obtained in which the melt-blown fibers 9 and the binder fibers 12 are entangled with each other. Note that a blowing amount of the binder fibers 12 (specifically, a mixing amount of the binder fibers 12) can be adjusted via a rotation speed of the lickerin roll 15, a supply amount of the air from the air supply duct 17 and the like.

The fiber aggregate 18 may be produced using conventional fiber opening equipment, such as a garnet machine, namely, the RANDO-WEBBER, for example.

Next, by heating and pressing the obtained web 11, the non-woven fabric web 1 is obtained. At this time, the web 11 is heated sufficiently such that each of the melt-blown fibers 9 and the binder fibers 12 are fused with each other at the contact point (the intersection, or the entanglement point), and at the same time, the web 11 is pressed from one surface side or both surface sides in the thickness direction of the web 11, thereby compressing the web 11. The thickness, solidity and the like of the non-woven fabric web 1 to be obtained can be adjusted by controlling heating and pressing conditions applied to the web 11. Note that the non-woven fabric web 1 is formed into a desired shape and used. The non-woven fabric web 1 may be obtained first, and then formed into a shape, or the web 11 may be formed into the desired shape first, and then heated and pressed so as to obtain the non-woven fabric web 1.

The heating temperature can be set as appropriate according to the types of fibers configuring the web 11. The heating temperature is a temperature equal to or higher than a temperature at which at least some of the binder fibers 12 melt, and is preferably a temperature at which the binder fibers 12 melt, but the melt-blown fibers 9 do not melt. When a binder fiber having a core-sheath structure is used, the heating temperature may be a temperature at which only a sheath portion of the binder fiber melts. The heating method is not limited to any method, and may be a method in which the web 11 is directly heated by a lamp, a heater and the like, or may be a method in which a press portion of a press machine, which is used for compressing the web 11, is heated, and the web 11 is indirectly heated at the time of compression.

The pressing pressure can be set as appropriate and may be 10 MPa, for example. The pressing method is not limited to any method, and may be a method in which the web 11 is pressed by a press machine, a calender, a pressure roller or the like, for example.

The weight per unit area (mass per unit area) of the non-woven fabric web 1 obtained in the above-described manner may be not less than about 300 g/m², not less than about 400 g/m², or not less than about 500 g/m², and may be not greater than about 1500 g/m², not greater than about 1000 g/m², or not greater than about 800 g/m². The weight per unit area of the non-woven fabric web 1 can be adjusted by controlling a ratio between the melt-blown fibers 9 content and the binder fibers 12 content, an injection amount of the melt-blown fibers 9 in the above-described method for manufacturing the non-woven fabric web, the blowing amount of the binder fibers 12, the operation speed of the accumulation device, and the like.

From the viewpoint of the self-supporting performance of the non-woven fabric web 1, a bending rigidity of the non-woven fabric web 1 may be not less than about 0.5 N/50 mm, not less than about 0.7 N/50 mm, not less than about 1.0 N/50 mm, not less than about 1.5 N/50 mm, or not less than about 2.0 N/50 mm. The bending rigidity of the non-woven fabric web 1 may be not greater than about 20.0 N/50 mm, not greater than about 15.0 N/50 mm, or not greater than about 10.0 N/50 mm. The bending rigidity of the non-woven fabric web 1 is measured in compliance with the three-point bending test (method A) as specified in JIS K7074 (1998). The bending rigidity of the non-woven fabric web 1 can be adjusted by controlling the ratio between the melt-blown fibers 9 content and the binder fibers 12 content, the weight per unit area of the non-woven fabric web 1, the thermocompression of the web 11, and the like.

The thickness of the non-woven fabric web 1 may be not greater than about 10 mm, not greater than about 5 mm, or not greater than about 3 mm, and may be not less than about 0.5 mm, not less than about 1.0 mm, or not less than about 1.5 mm. When the thickness of the non-woven fabric web 1 is in the above-described range, the non-woven fabric web 1 can be used in a narrow space.

From the viewpoint of the self-supporting performance of the non-woven fabric web 1, a bulk density of the non-woven fabric web 1 may be not less than about 50 kg/m³, not less than about 70 kg/m³, not less than about 100 kg/m³, not less than about 150 kg/m³, or not less than about 200 kg/m³. The bulk density of the non-woven fabric web 1 may be not greater than about 1000 kg/m³, not greater than about 700 kg/m³, or not greater than about 500 kg/m³.

From the viewpoint of achieving excellent sound absorbing properties, a loss factor tanδ of the non-woven fabric web 1 at the temperature of 20°C and the frequency of 10 Hz is not less than about 0.07, preferably not less than about 0.09, more preferably not less than about 0.10, and even more preferably not less than about 0.11. The loss factor tanδ of the non-woven fabric web 1 at the temperature of 20°C and the frequency of 10 Hz may be not greater than about 1.0, not greater than about 0.7, not greater than about 0.5, or not greater than about 0.3, for example.

From the viewpoint of reducing chipping noise (a tapping sound arising from stones flying up when the vehicle is traveling), a compression storage elastic modulus of the non-woven fabric web 1 at the temperature of 20°C and the frequency of 10 Hz is preferably not greater than about 10.0 MPa, not greater than about 8.0 MPa, not greater than about 6.0 MPa, not greater than about 5.0 MPa, not greater than about 3.0 MPa, not greater than about 2.0 MPa, or not greater than about 1.0 MPa. It is not less than about 0.10 MPa and not greater than about 10.0 MPa. The compression storage elastic modulus of the non-woven fabric web 1 at the temperature of 20°C and the frequency of 10 Hz may be not less than about 0.10 MPa, not less than about 0.30 MPa, not less than about 0.50 MPa, or not less than about 0.80 MPa.

A resin that provides the melt-blown fibers 9 that configure the non-woven fabric web 1 is not particularly limited, as long as the resin melts when heated and can be melted and spun by a melt-blown device. Such a resin comprises at least one resin selected from a cellulose such as rayon and viscose, a polyamide such as nylon 6 and nylon 6,6, a polyimide, polyethylene, a polypropylene (PP), a polyolefin such as an ethylene-alpha-olefin copolymer, polyethylene terephthalate, a polyester such as a polybutylene naphthalate, a polyacetal such as a polyoxymethylene copolymer, an ethylene-proplylene copolymer, a polyolefin thermoplastic elastomer such as a propylene 1-butene copolymer, a styrene-butadiene copolymer, a styrene thermoplastic elastomer such as a styrene-isopropylene copolymer, a polyurethane thermoplastic elastomer, and a polyester thermoplastic elastomer such as a polyethylene terephthalate thermoplastic elastomer and a polybutylene naphthalate thermoplastic elastomer.

Further, from the viewpoint of obtaining desired thermal properties, the resin that provides the melt-blown fibers (long fibers) 9 contains two or more types of resins, preferably having different thermal properties from each other, and more preferably contains two or more types of resins having different softening points from each other. The resin that provides the melt-blown fibers (long fibers) 9 contains two or more types of resins, they are a high-crystal polypropylene and a low-crystal polypropylene, from a viewpoint of compatibility of the resins. The high-crystal polypropylene means a polypropylene that has a relatively high stereoregularity of its molecular structure, of the two or more types of resins. The low-crystal polypropylene means a polypropylene that has a relatively low stereoregularity of its molecular structure, of the two or more types of resins. In this case, with respect to a total of 100 parts by mass of the high-crystal polypropylene and the low-crystal polypropylene, the content of the low-crystal polypropylene in the melt-blown fibers may be not less than about 0.5 parts by mass, not less than about 1 part by mass, not less than about 5 parts by mass, or not less than about 10 parts by mass, and the content may be not greater than about 90 parts by mass, not greater than about 85 parts by mass, or not greater than about 80 parts by mass.

The cross-sectional shape, the fiber diameter, the length and the like of the melt-blown fiber 9 are not particularly limited. Since the melt-blown fiber 9 has a fiber diameter of less than about 20 µm or about 1 to about 10 µm, a relative number of fibers with respect to a surface density increases in the non-woven fabric web 1 containing the melt-blown fibers 9, compared with a sound absorbing material formed of a non-woven fabric composed of generic fibers. As a result, a sound energy intruding via the non-woven fabric web 1 can be efficiently converted into air friction energy, thus enabling high sound absorbing properties to be obtained.

As the binder fibers (short fibers) 12 configuring the non-woven fabric web 1, a fiber can be used having a section with a melting temperature (softening temperature) that is lower than the melting temperature (softening temperature) of the resin that provides the melt-blown fibers 9, on at least part of the surface of the fiber. For example, the melting temperature (or softening temperature) of the above-described section of the binder fiber 12 may be lower than the melting temperature (or softening temperature) of the melt-blown fiber 9 by 10°C or greater or 20°C or greater. As a result of having such a section, the binder fibers 12 function as a binder. A resin that provides the binder fibers 12 may be one of the resins described above as examples of the resin that provides the melt-blown fibers 9. For the section of the binder fiber 12 with the low melting temperature (or the low softening point temperature), polyethylene terephthalate (PET), polypropylene (PT), polyethylene (PE) or the like, each of which have a low-melting point, can be used, for example.

The binder fiber 12 need not necessarily have a uniform melting temperature (or softening temperature) over the entire section thereof, and it is sufficient that the binder fiber 12 includes the section with the low melting temperature (or the low softening temperature), at least on the surface thereof. The binder fiber 12 may be a fiber having a core-sheath structure in which a resin having a low melting temperature (or a low softening temperature) is used only for the sheath portion thereof. When the fibers having this type of the core-sheath structure are used, when the fibers are mixed with the melt-blown fibers 9, only the sheath portion of each of the binder fibers 12 having the low melting temperature (or the low softening temperature) melts, and a core portion thereof remains as the fiber, together with the melt-blown fibers 9.

The cross-sectional shape, the fiber diameter, and the like of the binder fiber (short fiber) 12 configuring the non-woven fabric web 1 are not particularly limited. The binder fibers 12 may be staple fibers, having a fiber length of 10 mm to 100 mm, manufactured by cutting spun fibers, for example.

A fiber fineness of the binder fiber 12 is from about 1 dtex to about 100 dtex, for example, and may be from about 2 dtex to about 50 dtex, or from about 2 dtex to about 15 dtex.

A fiber length of the binder fiber 12 may preferably be from about 10 mm to about 100 mm, more preferably be from about 25 mm to about 60 mm, or be approximately about 150 mm, for example. The binder fiber 12 may be crimped so as to have about 1 to 10 or about 3 to 5 crimps per cm.

With respect to a total of 100 parts by mass of the melt-blown fibers 9 and the binder fibers 12, the content of the binder fibers 12 may be from about 30 parts by mass to about 90 parts by mass, or from about 40 parts by mass to about 80 parts by mass.

The non-woven fabric web 1 may further include other structural materials within a range that does not impair effects of the present invention. For example, the non-woven fabric web 1 may further include staple fibers that have a melting temperature equal to or higher than the melting temperature of the resin that provides the melt-blown fibers 9.

As a result of being provided with the above-described configuration, the non-woven fabric web 1 has an excellent sound absorption coefficient in a frequency domain ranging from 500 to 800 Hz (particularly, the sound absorption coefficient in the frequency domain of 800 Hz), for example, and when an air layer and the non-woven fabric web 1 are continuously disposed, the non-woven fabric web 1 can attain a particularly excellent sound absorption coefficient. Conventional sound absorbing materials have not been able to achieve a sufficient sound absorption coefficient in the frequency domain of 800 Hz, even when they offered an excellent sound absorption performance in a high frequency domain. Since sounds in this frequency domain corresponds to peaks in road noise, the non-woven fabric web 1 is suitable as a sound absorbing member for a vehicle exterior cladding member, such as a fender liner, an engine undercover, a body undercover, and the like.

Below, a mode in which a vehicular member provided with the non-woven fabric web 1 is used as the sound absorbing member for the vehicle exterior cladding member (the fender liner), will be described.

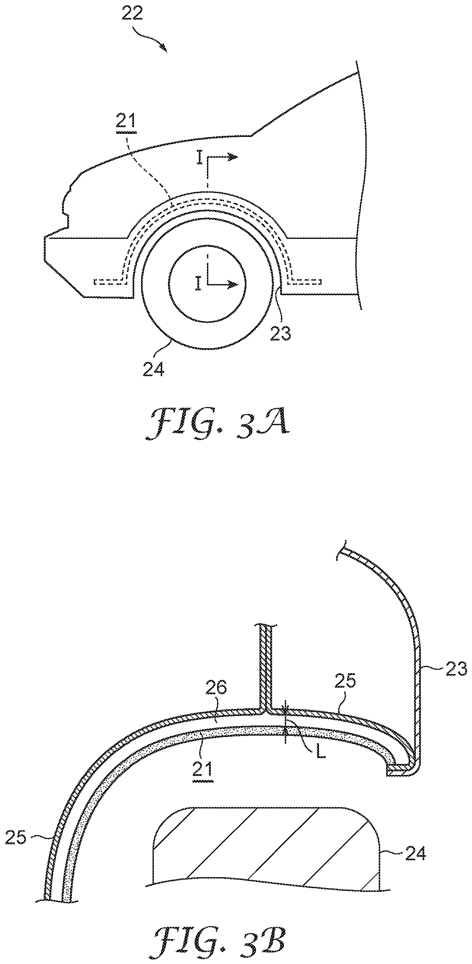

FIG. 3A is a schematic diagram illustrating the embodiment of the vehicular member (the fender liner), and FIG. 3B is a schematic end face view illustrating an end face as viewed in the direction of arrows I-I in FIG. 3A. As illustrated in FIGS. 3A and 3B, a fender liner (a vehicular member) 21 is fixed to a wheel housing 25 so as to be disposed separated from the wheel housing 25 formed in the interior of a vehicle body 22 (below a fender 23 and above a tire 24). The fender liner (vehicular member) 21 is a non-woven fabric web formed so as to correspond to the shape of the wheel housing 25, for example.

Means for attaching (or means for fixing) the fender liner 21 to the wheel housing 25 is not particularly limited. For example, the fender liner 21 may be fixed to the wheel housing 25 by providing holding means (a clip, for example) on the wheel housing 25 side, or may be fixed to the wheel housing 25 by providing a hole in the fender liner 21 and fitting the fender liner 21 into the wheel housing 25.

A space 26 formed by the fender liner 21 and the wheel housing 25 may be configured by an air layer and a layer formed by a sound absorbing body including a felt layer and the like. When the layers formed of the sound absorbing body are provided, these layers can function integrally with the fender liner 21 as a sound absorbing structure for preventing vehicle noise, vehicle external noise (traveling noise generated when the vehicle is traveling, and the like), and the like from infiltrating into the interior of the vehicle. Specifically, the sound absorbing structure is provided with a sound absorbing material layer such as the fender liner 21, the air layer, and the layer formed of the sound absorbing body including the felt layer and the like. As the sound absorbing structure, a sound absorbing structure in which the layer formed by the sound absorbing body is the air layer, is preferably used. A thickness L of the layer formed of the sound absorbing body may be from about 5 to 40 mm or about 5 to 20 mm, for example.

From another perspective, it can also be said that the present embodiment is a method for preventing the infiltration of the vehicle external noise into the interior of the vehicle. Specifically, the present embodiment is the method for preventing the infiltration of the vehicle external noise into the interior of the vehicle, and provides a method in which the fender liner 21 is disposed so as to be separated from the wheel housing 25, and the fender liner is provided with the non-woven fabric web 1. In this method, the fender liner 21 may be disposed so as to be separated from the wheel housing 25 by about 5 to 40 mm or about 5 to 20 mm. When the surface of the wheel housing 25 is not smooth, a clearance between the wheel housing 25 and the fender liner 21 may be an average value of the clearance.

According to the above-described method, the sound absorbing material layer formed of the fender liner 21 provided with the above-described non-woven fabric web 1, and the sound absorbing structure provided with the layer formed of the sound absorbing body including the air layer and the like are formed below the wheel housing 25. As a result, an excellent performance is obtained for preventing the infiltration of the vehicle external noise into the interior of the vehicle. Particularly, an excellent sound absorption coefficient is obtained in the frequency domain ranging from 500 to 800 Hz, and the infiltration of the road noise into the interior of the vehicle can be efficiently prevented.

### Examples

Although the present invention will be described below more specifically based on examples, the present invention is in no manner limited by the examples described below.

As melt-blown fibers, a high-crystal polypropylene (manufactured by SunAllomer Ltd.) and a low-crystal polypropylene (L-MODUS901 or L-MODU S400 manufactured by Idemitsu Kosan Co., Ltd.) were used, and the melt-blown fibers (long fibers) were spun from a melt-blown die by an extruder, such that the weight per unit areas of the high-crystal polypropylene and the low-crystal polypropylene were the values shown in Table 1. Then, binder fibers (short fibers) having a core-sheath structure (4080 produced by UNITIKA Ltd. with a fiber fineness of 6.6 dtex and a fiber length of 32 mm) and containing polyethylene terephthalate as a core material and a polyethylene terephthalate copolymer as a sheath material, were mixed with the melt-blown fibers, so as to merge into a web obtained immediately after the melt-blown fibers were spun and so as to have the weight per unit areas as shown in Table 1. As a result, a web was produced. By heating and compressing this web under conditions of 137°C and 10 MPa for 60 seconds, a non-woven fabric having a thickness of 2.0 mm was obtained, and then, a non-woven fabric web formed of one layer of this non-woven fabric was obtained.

**Table 1**

| | | | Example 1 | Example 2 | Example 3 | Example 4 | Example 5 | Example 6 | Comparative Example |
|---|---|---|---|---|---|---|---|---|---|
| Weight per unit area (g/m²) | Long fibers | High-cry stal polypropy lene | 57 | 87 | 76 | 112 | 41 | 63 | 101 |
| | | Low-crystal polypropy lene S901 | 132 | 204 | - | - | - | - | - |
| | | Low-crystal polypropy lene S400 | - | - | 76 | 112 | 96 | 148 | - |
| | Short fibers | | 204 | 314 | 267 | 393 | 257 | 396 | 337 |
| Percentage of short fibers with respect to total weight of long fibers and short fibers (mass%) | | | 52 | 52 | 64 | 64 | 65 | 65 | 77 |

### Measurement of Weight per Unit Area (Mass per Unit Area)

Three sheets of the non-woven fabric web each cut into a circular shape having a diameter of 133 mm were prepared, and a weight of each of the sheets was measured. An average value of the weights of the three sheets was calculated as a weight per unit area (mass per unit area). The results are shown in Table 2.

### Measurement of Thickness

The thickness (mm) of the non-woven fabric web was measured in compliance with ASTM F778-88. First, three sheets of the non-woven fabric web each cut into a circular shape having a diameter of 133 mm were prepared as test pieces. A measuring device provided with a pair of an upper plate and a lower plate each having a diameter of 100 mm was prepared, and a weight of 16 g was placed on the upper plate. Then, the upper plate was lifted, and a test piece was placed at the center of the lower plate. The height of the upper plate was adjusted so as to set a distance between the upper and lower plates to 1.0 cm, and the upper plate was released from this height and dropped onto the lower plate under its own weight. After waiting for three seconds in this state, the distance between the upper and lower plates was measured by a built-in micrometer. The measured value was recorded as the thickness of the non-woven fabric web.

### Measurement of Bending Rigidity

The bending rigidity of the non-woven fabric web was measured in compliance with the three-point bending test (method A) as specified in JIS K7074 (1998).

### Calculation of Bulk Density

The bulk density of the non-woven fabric web was calculated by dividing the weight per unit area (mass per unit area) measured in the above-described manner by the thickness measured in the above-described manner.

The various physical property values of the non-woven fabric web, which were measured in the above-described manner, are shown in Table 2.

**Table 2**

| | Example 1 | Example 2 | Example 3 | Example 4 | Example 5 | Example 6 | Comparative Example |
|---|---|---|---|---|---|---|---|
| Mass per unit area (g/m²) | 393 | 605 | 419 | 618 | 394 | 608 | 438 |
| Thickness (mm) | 2.0 | 2.6 | 1.8 | 2.0 | 1.6 | 1.9 | 1.7 |
| Bending rigidity (N/50 mm) | 1.1 | 2.8 | 1.8 | 4.2 | 1.5 | 3.0 | 1.8 |
| Bulk density (kg/m³) | 197 | 233 | 233 | 309 | 246 | 320 | 258 |

### Measurement of Viscoelastic Properties

Viscoelastic properties of the non-woven fabric web were measured using a dynamic viscoelasticity measuring device, namely, the RAS-III Solid Analyzer (manufactured by Rheometric Scientific Ltd.). After leaving the non-woven fabric web for 24 hours or longer, a test piece of a circular shape having a diameter of 8 mm was stamped out from the non-woven fabric web, and the compression storage elastic modulus E' and the loss factor tanδ (= compression storage elastic modulus E"/compression storage elastic modulus E') were measured under conditions in which a temperature rising rate was set to 5°C/min and a compression mode of 10 Hz was selected. The results (the compression storage elastic moduli E' and the loss factors tanδ at 20°C, 0°C, and -10°C) are respectively shown in Tables 3 and 4.

**Table 3**

| Compression storage elastic modulus E' (MPa) | Example 1 | Example 2 | Example 3 | Example 4 | Example 5 | Example 6 | Comparative Example |
|---|---|---|---|---|---|---|---|
| 20°C | 0.43 | 0.96 | 2.30 | 2.95 | 2.89 | 5.30 | 0.81 |
| 0°C | 1.39 | 2.77 | 4.10 | 5.96 | 5.61 | 10.69 | 0.91 |
| -10°C | 2.94 | 5.54 | 6.53 | 10.34 | 9.62 | 18.95 | 0.96 |

**Table 4**

| Loss factor tanδ | Example 1 | Example 2 | Example 3 | Example 4 | Example 5 | Example 6 | Comparative Example |
|---|---|---|---|---|---|---|---|
| 20°C | 0.13 | 0.12 | 0.08 | 0.10 | 0.09 | 0.10 | 0.05 |
| 0°C | 0.24 | 0.22 | 0.14 | 0.17 | 0.17 | 0.18 | 0.05 |
| -10°C | 0.15 | 0.14 | 0.10 | 0.11 | 0.11 | 0.11 | 0.05 |

### Measurement of Vertical Incident Sound Absorption Coefficient

The sound absorption coefficient of the non-woven fabric web was measured based on the two microphone method based on ASTM E1050-98 ("Impedance and Absorption Using A Tube, Two Microphones and A Digital Frequency Analysis System"). The measurement range was 125 Hz to 1600 Hz. The two microphone method is a method for measuring an incidence component and a reflection component of sound pressure inside an acoustic impedance tube and calculating the sound absorption coefficient, using two microphones. More specifically, the non-woven fabric web was set inside an acoustic impedance tube, one end portion of which was a rigid surface, such that the non-woven fabric web was separated from the rigid surface by 10 mm (an air layer of 10 mm was provided), and the sound absorption coefficient was measured by causing sound pressure to enter from a surface of the non-woven fabric web on the opposite side to a side facing the rigid surface. The results (sound absorption coefficients at 500 Hz and 800 Hz) are shown in Table 5.

**Table 5**

| Sound absorption coefficient | Example 1 | Example 2 | Example 3 | Example 4 | Example 5 | Example 6 | Comparative Example |
|---|---|---|---|---|---|---|---|
| 500 Hz | 0.11 | 0.23 | 0.11 | 0.17 | 0.09 | 0.16 | 0.08 |
| 800 Hz | 0.31 | 0.53 | 0.36 | 0.54 | 0.30 | 0.53 | 0.27 |

### Measurement of Chipping Noise

Chipping noise was measured for each of the non-woven fabric webs of Examples 1 to 6. Inside an anechoic chamber, a non-woven fabric web of 300 mm x 300 mm was prepared, and the non-woven fabric web was restrained by a jig at positions 50 mm inward from each edge of the non-woven fabric web. Then, the non-woven fabric web restrained by the jig was inclined by 45 degrees together with the jig, and was placed on the ground. A noise level meter was set at a position at a height of 150 mm from a ground plane and separated from a center portion of the non-woven fabric web by 40 mm, and a steel ball having a diameter of 8 mm and a weight of 2 g was dropped from a position located two meters above the center portion of the non-woven fabric web. An impact noise generated when the steel ball impacted the non-woven fabric web was measured as the chipping noise, using the noise level meter. The results (chipping noise at 1000 Hz, 2000 Hz, 4000 Hz, and 8000 Hz) are shown in Table 6.

**Table 6**

| Chipping noise (dB) | Example 1 | Example 2 | Example 3 | Example 4 | Example 5 | Example 6 |
|---|---|---|---|---|---|---|
| 1000 Hz | 76.7 | 80.1 | 81.2 | 83.3 | 84.4 | 87.3 |
| 2000 Hz | 68.5 | 74.0 | 78.2 | 81.5 | 77.6 | 82.8 |
| 4000 Hz | 57.3 | 64.0 | 72.5 | 75.0 | 70.0 | 77.5 |
| 8000 Hz | 54.1 | 50.7 | 64.4 | 65.2 | 62.4 | 68.0 |

## Claims

1. A vehicular sound absorbing member comprising a non-woven fabric web (11) having a loss factor, loss factor tanδ = compression storage elastic modulus E"/ compression storage elastic modulus E', at a temperature rising rate set to 5 °C/min, at 20 °C and 10 Hz of not less than 0.07, and having a bending rigidity measured in compliance with the three-point bending test method A as specified in JIS K7074 1998 of not less than 0.5 N/50 mm, wherein the non-woven fabric web (11) includes long fibers (9) and short fibres (12), the long fibers (9) being melt-blown fibers and the short fibers (12) being binder fibers, and wherein the melt-blown fibers comprise at least one resin selected from the group of resins consisting of a cellulose, a polyimide, ethylene alpha-olefin copolymer, a polybutylene naphthalate, a polyacetal, an ethylene-propylene copolymer, a polyolefin thermoplastic elastomer, a styrene thermoplastic elastomer, a polyurethane thermoplastic elastomer, a polyester thermoplastic elastomer, and a resin that contains a high-crystal polypropylene and a low-crystal polypropylene, the high-crystal polypropylene having a relatively high stereoregularity of its molecular structure as compared to that of the low-crystal polypropylene.

2. The vehicular sound absorbing member according to claim 1, wherein the non-woven fabric web has a bulk density that is not less than 50 kg/m³.

3. The vehicular sound absorbing member according to claim 1 or 2, wherein the non-woven fabric web has a compression storage elastic modulus at 20°C and 10 Hz in the range of not less than 0.10 MPa and not greater than 10.0 MPa.

4. The vehicular sound absorbing member according to any one of claims 1 to 3, wherein the non-woven fabric web has a compression storage elastic modulus at 20°C and 10 Hz in the range of not less than 0.10 MPa and not greater than 2.0 MPa.

5. The vehicular sound absorbing member according to any one of claims 1 to 4, wherein the non-woven fabric web has a loss factor at 20°C and 10 Hz that is not less than 0.10.

6. The vehicular sound absorbing member according to any one of the preceding claims, wherein the melt-blown fibers comprise a resin that contains two or more types of resins.

7. The vehicular sound absorbing member according to claim 6, wherein the melt-blown fibers comprise a resin that contains two or more types of resins having different thermal properties from each other.

8. The vehicular sound absorbing member according to claim 6 or 7, wherein the melt-blown fibers comprise a resin that contains two or more types of resins having different softening points from each other.

9. The vehicular sound absorbing member according to claim 1, wherein the melt-blown fibers comprise a resin that contains a high-crystal polypropylene and a low-crystal polypropylene, where the content of the low-crystal polypropylene in the melt-blown fibers is not less than 0.5 parts by mass and not greater than 90 parts by mass, with respect to a total of 100 parts by mass of the high-crystal polypropylene and the low-crystal polypropylene.

10. The vehicular sound absorbing member according to any one claims 1 to 8, wherein the melt-blown fibers comprise at least one resin selected from the group of resins consisting of rayon, viscose, a polyoxymethylene copolymer, an ethylene-proplylene copolymer, a propylene I-butene copolymer, a styrene-isopropylene copolymer, a polyethylene terephthalate thermoplastic elastomer and a polybutylene naphthalate thermoplastic elastomer.

11. The vehicular sound absorbing member according to any one of claims 1 to 10, wherein the vehicular sound absorbing member is a vehicle exterior cladding member that is suitable for being exposed to the environment outside of a vehicle.

12. The vehicular sound absorbing member according to any one of claims 1 to 11, wherein the vehicular sound absorbing member is a vehicle exterior cladding member from the group consisting of a fender liner, an engine undercover, a body undercover, and the like.

## Patentansprüche

1. Ein geräuschdämmendes Teil eines Fahrzeugs, das eine Vliesstoffbahn (11) umfasst, die einen Verlustfaktor, Verlustfaktor tanδ = Kompressionsspeicher-Elastizitätsmodul E"/ Kompressionsspeicher-Elastizitätsmodul E', bei einer auf 5 °C/min eingestellten Temperaturanstiegsgeschwindigkeit bei 20 °C und 10 Hz von nicht weniger als 0,07 aufweist, und eine Biegesteifigkeit, gemessen in Übereinstimmung mit dem Dreipunkt-Biegetestverfahren A, wie in JIS K7074 1998 spezifiziert, von nicht weniger als 0,5 N/50 mm aufweist, wobei die Vliesstoffbahn (11) lange Fasern (9) und kurze Fasern (12) aufweist, wobei die langen Fasern (9) schmelzgeblasene Fasern und die kurzen Fasern (12) Bindefasern sind, und wobei die schmelzgeblasenen Fasern mindestens ein Harz umfassen, das aus der Gruppe von Harzen ausgewählt ist, die aus einer Cellulose, einem Polyimid, Ethylen-alpha-Olefin-Copolymer, einem Polybutylennaphthalat, einem Polyacetal, einem Ethylen-Propylen-Copolymer, einem thermoplastischen Polyolefin-Elastomer, einem thermoplastischen Styrol-Elastomer, einem thermoplastischen Polyurethan-Elastomer, einem thermoplastischen Polyester-Elastomer und einem Harz besteht, das ein hochkristallines Polypropylen und ein niederkristallines Polypropylen enthält, wobei das hochkristalline Polypropylen eine relativ hohe Stereoregularität seiner Molekularstruktur im Vergleich zu der des niederkristallinen Polypropylens aufweist.

2. Das geräuschdämmende Teil eines Fahrzeugs nach Anspruch 1, wobei die Vliesstoffbahn eine Rohdichte von nicht weniger als 50 kg/m³ aufweist.

3. Das geräuschdämmende Teil eines Fahrzeugs nach Anspruch 1 oder 2, wobei die Vliesstoffbahn einen Kompressionsspeicher-Elastizitätsmodul bei 20 °C und 10 Hz im Bereich von nicht weniger als 0,10 MPa und nicht mehr als 10,0 MPa aufweist.

4. Das geräuschdämmende Teil eines Fahrzeugs nach einem der Ansprüche 1 bis 3, wobei die Vliesstoffbahn einen Kompressionsspeicher-Elastizitätsmodul bei 20 °C und 10 Hz im Bereich von nicht weniger als 0,10 MPa und nicht mehr als 2,0 MPa aufweist.

5. Das geräuschdämmende Teil eines Fahrzeugs nach einem der Ansprüche 1 bis 4, wobei die Vliesstoffbahn einen Verlustfaktor bei 20 °C und 10 Hz aufweist, der nicht weniger als 0,10 beträgt.

6. Das geräuschdämmende Teil eines Fahrzeugs nach einem der vorstehenden Ansprüche, wobei die schmelzgeblasenen Fasern ein Harz umfassen, das zwei oder mehr Arten von Harzen enthält.

7. Das geräuschdämmende Teil eines Fahrzeugs nach Anspruch 6, wobei die schmelzgeblasenen Fasern ein Harz umfassen, das zwei oder mehr Arten von Harzen mit unterschiedlichen thermischen Eigenschaften aufweist.

8. Das geräuschdämmende Teil eines Fahrzeugs nach Anspruch 6 oder 7, wobei die schmelzgeblasenen Fasern ein Harz umfassen, das zwei oder mehr Arten von Harzen mit unterschiedlichen Erweichungspunkten aufweist.

9. Das geräuschdämmende Teil eines Fahrzeugs nach Anspruch 1, wobei die schmelzgeblasenen Fasern ein Harz umfassen, das ein hochkristallines Polypropylen und ein niederkristallines Polypropylen enthält, wo der Gehalt des niederkristallinen Polypropylens in den schmelzgeblasenen Fasern nicht weniger als 0,5 Masseteile und nicht mehr als 90 Masseteile, bezogen auf insgesamt 100 Masseteile des hochkristallinen Polypropylens und des niederkristallinen Polypropylens, beträgt.

10. Das geräuschdämmende Teil eines Fahrzeugs nach einem der Ansprüche 1 bis 8,
wobei die schmelzgeblasenen Fasern mindestens ein Harz umfassen, das aus der Gruppe von Harzen ausgewählt ist, die aus Rayon, Viskose, einem Polyoxymethylen-Copolymer, einem Ethylen-Propylen-Copolymer, einem Propylen-I-Buten-Copolymer, einem Styrol-Isopropylen-Copolymer, einem thermoplastischen Polyethylenterephthalat-Elastomer und einem thermoplastischen Polybutylennaphthalat-Elastomer besteht.

11. Das geräuschdämmende Teil eines Fahrzeugs nach einem der Ansprüche 1 bis 10, wobei das geräuschdämmende Teil des Fahrzeugs ein Außenverkleidungselement eines Fahrzeugs ist, das geeignet ist, der Umgebung außerhalb eines Fahrzeugs ausgesetzt zu werden.

12. Das geräuschdämmende Teil eines Fahrzeugs nach einem der Ansprüche 1 bis 11, wobei das geräuschdämmende Teil des Fahrzeugs ein Außenverkleidungselement eines Fahrzeugs aus der Gruppe ist, die aus einer Kotflügelverkleidung (21), einer Motorabdeckung, einer Karosserieabdeckung und dergleichen besteht.

## Revendications

1. Élément d'absorption sonore de véhicule comprenant une bande textile non tissée (11) ayant un facteur de perte, le facteur de perte tanδ = module élastique de conservation en compression E"/ module élastique de conservation en compression E', à une vitesse de montée en température définie sur 5 °C/min, à 20 °C et 10 Hz qui n'est pas inférieur à 0,07, et ayant une rigidité en flexion mesurée en conformité avec le procédé de test de flexion en trois points A tel que spécifié dans JIS K7074 1998 qui n'est pas inférieure à 0,5 N/50 mm, dans lequel la bande textile non tissée (11) inclut des fibres longues (9) et des fibres courtes (12), les fibres longues (9) étant des fibres soufflées en fusion et les fibres courtes (12) étant des fibres de liaison, et dans lequel les fibres soufflées en fusion comprennent au moins une résine choisie dans le groupe de résines constitué d'une cellulose, un polyimide, un copolymère éthylène-alpha-oléfine, un naphtalate de polybutylène, un polyacétal, un copolymère éthylène-propylène, un élastomère thermoplastique de polyoléfine, un élastomère thermoplastique de styrène, un élastomère thermoplastique de polyuréthane, un élastomère thermoplastique de polyester, et une résine qui contient un polypropylène hautement cristallin et un polypropylène faiblement cristallin, le polypropylène hautement cristallin ayant une stéréorégularité relativement élevée de sa structure moléculaire par comparaison avec celle du polypropylène faiblement cristallin.

2. Élément d'absorption sonore de véhicule selon la revendication 1, dans lequel la bande textile non tissée a une masse volumique apparente qui n'est pas inférieure à 50 kg/m³.

3. Élément d'absorption sonore de véhicule selon la revendication 1 ou 2, dans lequel la bande textile non tissée a un module élastique de conservation en compression à 20 °C et 10 Hz dans la plage de pas moins de 0,10 MPa et pas plus de 10,0 MPa.

4. Élément d'absorption sonore de véhicule selon l'une quelconque des revendications 1 à 3, dans lequel la bande textile non tissée a un module élastique de conservation en compression à 20 °C et 10 Hz dans la plage de pas moins de 0,10 MPa et pas plus de 2,0 MPa.

5. Élément d'absorption sonore de véhicule selon l'une quelconque des revendications 1 à 4, dans lequel la bande textile non tissée a un facteur de perte à 20 °C et 10 Hz qui n'est pas inférieur à 0,10.

6. Élément d'absorption sonore de véhicule selon l'une quelconque des revendications précédentes, dans lequel les fibres soufflées en fusion comprennent une résine qui contient deux types de résines ou plus.

7. Élément d'absorption sonore de véhicule selon la revendication 6, dans lequel les fibres soufflées en fusion comprennent une résine qui contient deux types de résines ou plus ayant des propriétés thermiques différentes les unes des autres.

8. Élément d'absorption sonore de véhicule selon la revendication 6 ou 7, dans lequel les fibres soufflées en fusion comprennent une résine qui contient deux types de résines ou plus ayant des points de ramollissement différents les uns des autres.

9. Élément d'absorption sonore de véhicule selon la revendication 1, dans lequel les fibres soufflées en fusion comprennent une résine qui contient un polypropylène hautement cristallin et un polypropylène faiblement cristallin, où la teneur du polypropylène faiblement cristallin dans les fibres soufflées en fusion n'est pas inférieure à 0,5 partie en masse et pas supérieure à 90 parties en masse, par rapport à un total de 100 parties en masse du polypropylène hautement cristallin et du polypropylène faiblement cristallin.

10. Élément d'absorption sonore de véhicule selon l'une quelconque des revendications 1 à 8, dans lequel les fibres soufflées en fusion comprennent au moins une résine choisie dans le groupe de résines constitué de rayonne, viscose, un copolymère de polyoxyméthylène, un copolymère éthylène-propylène, un copolymère propylène I-butène, un copolymère styrène-isopropylène, un élastomère thermoplastique polyéthylène téréphtalate et un élastomère thermoplastique naphtalate de polybutylène.

11. Élément d'absorption sonore de véhicule selon l'une quelconque des revendications 1 à 10, dans lequel l'élément d'absorption sonore de véhicule est un élément d'habillage d'extérieur de véhicule qui est approprié pour être exposé à l'environnement à l'extérieur d'un véhicule.

12. Élément d'absorption sonore de véhicule selon l'une quelconque des revendications 1 à 11, dans lequel l'élément d'absorption sonore de véhicule est un élément d'habillage d'extérieur de véhicule dans le groupe constitué d'un revêtement d'aile (21), une couverture inférieure de moteur, une couverture inférieure de carrosserie, et similaires.
